# EUROPEAN PATENT SPECIFICATION

(11) **EP 3 249 065 B1**
(45) Date of publication and mention of the grant of the patent: **20.02.2019**
(21) Application number: 16201923.6
(22) Date of filing: 02.12.2016
(51) Int. Cl.: C22C 21/02, C22C 21/04, H01L 23/34

(54) **HEAT SINK FOR BATTERY USING ALUMINUM ALLOY AND MANUFACTURING METHOD THEREOF**
KÜHLKÖRPER FÜR BATTERIE MIT ALUMINIUMLEGIERUNG UND HERSTELLUNGSVERFAHREN DAFÜR
DISSIPATEUR DE CHALEUR POUR BATTERIE UTILISANT UN ALLIAGE D'ALUMINIUM ET SON PROCÉDÉ DE FABRICATION

(30) Priority: 24.05.2016 KR 20160063583
(43) Date of publication of application: 29.11.2017
(73) Proprietor: Hyundai Motor Company, Seoul 137-938 (KR); Kia Motors Corporation, Seoul 137-938 (KR)
(72) Inventor: KIM, Byong-Soo, 16044, Uiwang-si, Gyeonggi-do (KR); YOON, Kwang-Min, Gyeonggi-do 16493 (KR); JEONG, Tae-Ho, 16862 Yongin-si, Gyeonggi-do (KR)
(74) Representative: Viering, Jentschura & Partner mbB Patent- und Rechtsanwälte

(56) References cited:
- JP-A- 2002 105 571
- US-A1- 2001 043 880
- M. S. P. MURTHY ET AL: "Estimation of interdendritic undercooling during freezing of ternary and quaternary aluminium alloys", JOURNAL OF MATERIALS SCIENCE, vol. 17, no. 8, 1 August 1982 (1982-08-01) , pages 2194-2198, XP055373742, Dordrecht ISSN: 0022-2461, DOI: 10.1007/BF00543727

## Description

### BACKGROUND OF THE INVENTION

### Field of the Invention

Exemplary embodiments of the present invention relate to a technology for a heat sink made from an aluminum material to which a diecasting method may be applied. In some embodiments, an aluminum alloy composition for diecasting having improved thermal conductivity and castability can be made by optimizing the silicon (Si) content in order to improve flowability of an aluminum molten metal. In some instances, the aluminum alloy includes a total content of elements except for silicon (Si) and iron (Fe) not to exceed 0.3 wt%. It is a heat sink for a battery using such an aluminum alloy for diecasting having improved thermal conductivity and castability. Provided herein is a heat sink that can be used for indirect cooling of a high voltage battery system for an environmentally-friendly vehicle, and a manufacturing method thereof.

### Description of Related Art

Since electronic control of a vehicle is increasing and higher output of an electronic device is promoted, heat radiation has emerged as a problem. There is a need for materials with desirable heat radiation characteristics and properties.

Generally, an aluminum alloy can be applied to parts for diecasting. In some cases, an Al-Si alloy such as ADC3, ADC10, and ADC12, and an Al-Mg alloy such as ADC5 or ADC6 can be used. Although, these aluminum alloys have excellent strength, the have low thermal conductivity due to components added during the production of the alloy. As such, there are limitations to the use of these aluminum alloys for heat radiation parts.

An aluminium alloy including 12 wt% Si, 0.6 wt% Fe and a remainder of Al is known from e.g. M. S. P. MURTHY ET AL: "Estimation of interdendritic undercooling during freezing of ternary and quaternary aluminium alloys", JOURNAL OF MATERIALS SCIENCE, vol. 17, no. 8, 1 August 1982, pages 2194-2198. The Japanaese application JP 2002 105571 discloses an aluminium alloy for use as a heat sink which contains 4-14% Si and 0.2-1.0% Fe and at least one of Ca, Sr and Na each in an amount of 0.003-0.05%.

For example with ADC10 and ACD12 alloys which are optimized for a diecasting method, their thermal conductivity is 98 W/(m·K), which corresponds to 43% of that of pure aluminum (230 W/(m·K)). Thus, there are problems with using such materials for manufacturing a housing requiring heat management or a heat sink.

Components such as silicon (Si) and copper (Cu), magnesium (Mg), iron (Fe), zinc (Zn) and nickel (Ni) can be regulated or adjusted in order to increase its thermal conductivity. A composition of the existing aluminum alloy is as shown in Table 1 below.

**[Table 1]**

| Conte nt (wt%) | Si | Fe | Mg | Zn | Cu | Mn | Ni | B | Cr | Al | Applied Process |
|---|---|---|---|---|---|---|---|---|---|---|---|
| A | 9.6-12.0 | 1.3 or less | 0.3 or less | 1.0 or less | 1.5-3.5 | 0.5 or less | 0.5 or less | - | - | Remainder | Diecasting |
| B | 0.4-1.6 | 0.2 -1.0 | 0.3 -0.7 | - | - | - | - | 0.002-0.08 | - | Remainder | Diecasting |
| C | 0.1-0.6 | 0.1 -0.8 | 0.2 - 0.9 | - | - | - | 1.0 - 6.0 | 0.0001 -0.05 | - | Remainder | Diecasting |
| D | 0.4-0.8 | 0.7 or less | 0.8 - 1.2 | 0.25 or less | 0.15 - 0.40 | 0.10 or less | - | - | 0.04 - 0.35 | Remainder | Extrusion |

Specifically, the existing aluminum alloy material as shown in Table 1 has problems as follows.

In the case of an aluminum alloy material A that mainly regulates silicon (Si) and copper (Cu) components, many alloy elements are added in the process in order to improve flowability of a molten metal and seizure to a mold, such that thermal conductivity of the alloy is deteriorated. In particular, when the content of copper (Cu) component which is a main reinforcement material of the aluminum alloy, is excessively large, the thermal conductivity is decreased and hot shortness occurs during the diecasting method.

In the case of an aluminum alloy material B or C that regulates silicon (Si), magnesium (Mg), iron (Fe), boron (B) components, thermal conductivity is remarkably improved as compared to the material A. However, since the content of silicon (Si) component in material B or C is smaller than the reference level, flowability of a molten metal is significantly deteriorated. Accordingly, the material B or C may not be used in a diecasting method which is mainly used for vehicles.

Material D of Table 1 is an aluminum extruded material, and can have an excellent thermal conductivity of about 180 to 200 W/(m·K) by decreasing a content of zinc (Zn), copper (Cu), magnesium (Mg), etc. Unfortunately, material D can only be used in an extrusion process to manufacture a product, and the diecasting method may not be used. With such an extruded material, the material is 70% more expensive compared to a diecasting material. Therefore it is disadvantageous in terms of cost of parts, and due to characteristics of the extrusion process, the degree of freedom of design is significantly deteriorated and the design constraints are increased.

Accordingly, there is a need for aluminum alloy compositions for diecasting methods that have excellent thermal conductivity.

A high voltage battery used for an environmentally-friendly vehicle is an energy supply source that flows a large amount of current with hundreds of volts of high direct current voltage to drive a driving motor of a vehicle, and supplies power to electric parts for a vehicle. In the high voltage battery, a direct cooling method in which each battery cell is directly cooled using an air or a cooling water in order to control heat in the battery has been mainly used. Recently, an indirect cooling method in which a battery cell is cooled by mounting a heat sink and flowing a cooling fluid only on an upper part thereof in order to increase output efficiency per battery volume that affects capacity of the battery, has been developed and used.

For the indirect cooling method described in the related art, only a heat sink manufactured by forming a lower part of a portion that surface-contacts the battery cells using an aluminum plate, forming a portion that contacts a cooling fluid in a fin shape using an aluminum extruded material, and the like, and assembling them, respectively, has been developed and applied. Therefore, a complicated process of assembling the heat sink with the battery cell and again assembling plastic injection molded articles to form an appearance after manufacturing the heat sink needs to be performed.

### SUMMARY OF THE INVENTION

The present invention provides an aluminum alloy heat sink for a battery according to claim 1 and a manufacturing method of a heat sink for a battery according to claim 6. Further embodiments of the heat sink and the manufacturing method are described in the respective dependent claims. An embodiment of the present invention is directed to a new aluminum alloy material that may be used as a heat sink material at the time of manufacturing an electronic part requiring heat radiation characteristics or part for a vehicle using a diecasting method.

Specifically, an embodiment of the present invention is directed to an aluminum alloy for diecasting to which a diecasting method having high degree of freedom of design by optimizing a content of silicon (Si) and iron (Fe) and a content of elements except for silicon (Si) and iron (Fe) may be applied, and of which thermal conductivity is high.

The present invention is directed to a heat sink for a battery capable of performing insert injection molding of a plastic structure by integrally manufacturing a lower part contacting battery cells and an upper part contacting a cooling fluid using the aluminum alloy for diecasting by a diecasting method without a separate assembly process, and a manufacturing method thereof.

An aluminum alloy for diecasting contains 10.0 wt% to 12.0 wt% (e.g., about 10.0 wt%, 10.1 wt%, 10.2 wt%, 10.3 wt%, 10.4 wt%, 10.5 wt%, 10.6 wt%, 10.7 wt%, 10.8 wt%, 10.9 wt%, 11.0 wt%, 11.1 wt%, 11.2 wt%, 11.3 wt%, 11.4 wt%, 11.5 wt%, 11.6 wt%, 11.7 wt%, 11.8 wt%, 11.9 wt%, or about 12.0 wt%) of silicon (Si), 0.5 wt% to 0.8 wt% (e.g., about 0.5 wt%, 0.6 wt%, 0.7 wt%, or about 0.8 wt%) of iron (Fe), 0.3 wt% or less (e.g., about 0.3 wt%, 0.28 wt%, 0.25 wt%, 0.2 wt%, 0.1 wt%, or less) of impurities, and remainder of aluminum (Al).

A term "impurities" mean materials except for silicon (Si), iron (Fe), and aluminum (Al) in the aluminum alloy, and the impurities preferably may include one or more elements selected from zinc (Zn), manganese (Mn), chromium (Cr), nickel (Ni), titanium (Ti), boron (B), and tin (Sn). Here, any impurities that may be used in the art may be used without particular limitation in addition to the above described impurities.

Thermal conductivity of the aluminum alloy for diecasting of which the contained materials have above described content range may be 167 W/(m·K) or more (e.g., 167 W/(m·K), 170. 175, 180, 185, 190, 200, 230, 250, 300, 500 W/(m·K), or more).

In accordance with the present invention, a heat sink for a battery includes: a radiation fin part 31 including a plurality of radiation fins 21 that radiate heat by contacting a cooling fluid; and a thin wall part 11 disposed at a lower end of the radiation fin part 31 and surface-contacting battery cells to transfer heat to the radiation fin 21 contacting the cooling fluid, in which fastening holes 50 for performing insert injection molding of a plastic structure are formed at both ends of the thin wall part 11, and the radiation fin part 31 and the thin wall part 11 are integrally manufactured using a single material by diecasting.

Two or more fastening holes 50 may be formed at one side end of the thin wall part, and preferably, two fastening holes may be formed.

The radiation fin part 31 may include the plurality of radiation fins formed to be spaced apart from each other at a predetermined distance in a direction orthogonal to a direction of a surface of the thin wall part 11 and be integrally formed on an upper end of the thin wall part 11.

The radiation fins may have a height of 1.5 cm to 3 cm (e.g., about 1.5 cm, 1.6, 1.7, 1.8, 1.9, 2.0, 2.1, 2.2, 2.3, 2.4, 2.5, 2.6, 2.7, 2.8, 2.9 or about 3 cm), a thickness of from about 0.8 mm to about 5 mm (e.g., about 0.8 mm, 0.9 mm, 1 mm 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, or about 5 mm) and a pitch of from about 2 mm to about 10 mm (e.g., about 2 mm, 3 mm 4 mm 5 mm, 6 mm, 7 mm 8 mm 9 mm, or about 10 mm).

The thin wall part may have a thickness of from 0.8 mm to 1.5 mm (e.g., about 0.8 mm, 0.9 mm, 1 mm 1.1 mm, 1.2 mm, 1.3 mm, 1.4 mm, 1.5 mm).

The single material forming the heat sink for a battery is an aluminum alloy containing 10.0 wt% to 12.0 wt% (e.g., about 10.0 wt%, 10.1 wt%, 10.2 wt%, 10.3 wt%, 10.4 wt%, 10.5 wt%, 10.6 wt%, 10.7 wt%, 10.8 wt%, 10.9 wt%, 11.0 wt%, 11.1 wt%, 11.2 wt%, 11.3 wt%, 11.4 wt%, 11.5 wt%, 11.6 wt%, 11.7 wt%, 11.8 wt%, 11.9 wt%, or about 12.0 wt%)of silicon (Si), 0.5 wt% to 0.8 wt% (e.g., about 0.5 wt%, 0.6 wt%, 0.7 wt% or about 0.8 wt%) of iron (Fe), 0.3 wt% or less (e.g., about 0.3 wt%, 0.28 wt%, 0.25 wt%, 0.2 wt%, 0.1 wt% or less) of impurities, and remainder of aluminum (Al), and the impurities may include one or more elements selected from zinc (Zn), manganese (Mn), chromium (Cr), nickel (Ni), titanium (Ti), boron (B), and tin (Sn).

Thermal conductivity of the heat sink for a battery may be 190 W/(m·K) or more (e.g., about 190, 200, 210, 230, 250, 300, 350, 500 W/(m·K) or more).

In accordance with another embodiment of the present invention, a manufacturing method of a heat sink for a battery includes: a molten metal forming step of forming a molten metal by dissolving 10.0 wt% to 12.0 wt% (e.g., about 10.0 wt%, 10.1 wt%, 10.2 wt%, 10.3 wt%, 10.4 wt%, 10.5 wt%, 10.6 wt%, 10.7 wt%, 10.8 wt%, 10.9 wt%, 11.0 wt%, 11.1 wt%, 11.2 wt%, 11.3 wt%, 11.4 wt%, 11.5 wt%, 11.6 wt%, 11.7 wt%, 11.8 wt%, 11.9 wt%, or about 12.0 wt%) of silicon (Si), 0.5 wt% to 0.8 wt% (e.g., about 0.5 wt%, 0.6 wt%, 0.7 wt% or about 0.8 wt%) of iron (Fe), 0.3 wt% or less of impurities and remainder of aluminum (Al); a diecasting step of injecting the molten metal into a diecasting mold to form the heat sink for a battery; and an aging heat treatment step of heat treating the heat sink for a battery for 6 hours after raising a temperature of the heat sink for a battery to from 250°C to 350°C (e.g., about 250°C, about 260°C, about 270°C, about 280°C, about 290°C, about 300°C, about 310°C, about 320°C, about 330°C, about 340°C, or about about 350°C, and then slowly cooling the heat sink for a battery.

In the diecasting step, the molten metal is injected into the diecasting mold using a plunger, a pressurizing speed of the plunger may be divided into a first speed section and a second speed section having different pressurizing speeds, a pressurizing speed in the second speed section may be faster than that in the first speed section, and the pressurizing speed in the second speed section may be from 3 m/s to 3.5 m/s (e.g., about 3 m/s, 3.1 m/s, 3.2 m/s, 3.3 m/s, 3.4 m/s, or about 3.5 m/s).

If the speed in the second speed section is less than 3 m/s, the molten metal is not properly injected into the diecasting mold, such that insufficiently molded portions present, that is, a portion formed at a thin thickness is insufficiently molded, and if the speed in the second speed section is greater than 3.5 m/s, since the speed is high, air may be excessively mixed, thereby affecting the quality of products.

In the aging heat treatment step, a heating rate is faster than a cooling rate in terms of temperature change per unit time.

### BRIEF DESCRIPTION OF THE DRAWINGS

FIGS. 1A and 1B are tables showing thermal conductivity measurement data of an aluminum alloy according to an embodiment of the present invention.
FIG. 2 is a diagram showing a configuration of an indirect cooling type battery module for a vehicle.
FIG. 3 is a diagram showing a configuration of the existing assembly type heat sink.
FIG. 4 is a diagram showing a configuration of a heat sink for a battery according to an embodiment of the present invention.
FIG. 5 is a front view of a heat sink for a battery according to an embodiment of the present invention.
FIG. 6 is a front view showing a state in which a plastic structure is integrally injection-molded in a heat sink for a battery according to an embodiment of the present invention.

### DESCRIPTION OF SPECIFIC EMBODIMENTS

In the specification, it is to be noted that the terms "comprising", "including", or "adding", and the like, are not construed as necessarily including several components or several steps described in the specification and some of the above components or steps may not be included or additional components or steps are construed may be further included.

Hereinafter, embodiments of the present invention will be described in detail with reference to the accompanying drawings, and the embodiments may be modified in various different ways by a person having ordinary skill in the art to which the present invention pertains, thus the present invention is not limited to the embodiments described herein.

A range of a content of composition of an aluminum alloy for diecasting according to the present invention is as shown in Table 2 below. A term "impurities" in Table 2 indicates a total content of elements except for aluminum (Al), silicon (Si), and iron (Fe).

**[Table 2]**

| Content (wt%) | Si | Fe | Impurities | Al | Applied Method |
|---|---|---|---|---|---|
| Example 1 | 10.0-12.0 | 0.5-0.8 | 0.3 or less | Remainder | Diecasting |

Generally, in the aluminum alloy for diecasting, flowability of an aluminum molten metal is the most important factor. The flowability of the molten metal is changed depending on an added element of the aluminum alloy, and in particular, the flowability of the molten metal is determined depending on a content of silicon (Si).

Silicon (Si), which is a main component of the aluminum alloy for diecasting of the present invention, plays an important role of improving formability of a product as a result of improving the flowability of the aluminum molten metal, the content of silicon (Si) is 10.0 wt% to 12.0 wt% (e.g., about 10.0 wt%, 10.1 wt%, 10.2 wt%, 10.3 wt%, 10.4 wt%, 10.5 wt%, 10.6 wt%, 10.7 wt%, 10.8 wt%, 10.9 wt%, 11.0 wt%, 11.1 wt%, 11.2 wt%, 11.3 wt%, 11.4 wt%, 11.5 wt%, 11.6 wt%, 11.7 wt%, 11.8 wt%, 11.9 wt%, or about 12.0 wt%) based on the total weight of the aluminum alloy.

When a content of silicon (Si) is less than 10 wt%, for example, a product manufactured using an aluminum alloy containing silicon of 8 wt% and iron (Fe) of 1.0 wt%, flowability of a molten metal is deteriorated, such that insufficiently molded portions may present in the product or a shape of the product may be deformed.

When the content of silicon (Si) is greater than 12.0 wt%, the flowability of the molten metal is excessively increased, such that an excessive amount of gas pockets occur. As a result, bubbles are generated in the product manufactured by diecasting, thereby causing a quality problem.

Iron (Fe), which is another main component of the aluminum alloy for diecasting of the present invention, is to remove seizure between the aluminum alloy and a diecasting mold at the time of taking the aluminum alloy out in the diecasting process. The content of iron (Fe) is 0.5 wt% to 0.8 wt% (e.g., about 0.5 wt%, 0.6 wt%, 0.7 wt%, or about 0.8 wt%) based on the total weight of the aluminum alloy. When the content of iron (Fe) is less than 0.5 wt%, since the content is small, the seizure between the diecasting mold and the aluminum alloy occurs, and when the content of iron (Fe) is greater than 0.8 wt%, since the content of iron (Fe) is large, corrosion resistance of the aluminum alloy is deteriorated.

In the aluminum alloy for diecasting the content of impurities which are elements except for aluminum (Al), silicon (Si), and iron (Fe) is 0.3 wt% or less (e.g., about 0.3 wt%, 0.29 wt%, 0.28 wt%, 0.27 wt%, 0.26 wt%, 0.25 wt%, 0.24 wt%, 0.23 wt%, 0.22 wt%, 0.21 wt%, 0.2 wt%, 0.19 wt%, 0.18 wt%, 0.17 wt%, 0.16 wt%, 0.15 wt%, 0.14 wt%, 0.13 wt%, 0.12 wt%, 0.11 wt%, 0.1 wt%, 0.09 wt%, 0.08 wt%, 0.07 wt%, 0.06 wt%, 0.05 wt%, or less) based on the total weight of the aluminum alloy, and when the content of impurities is greater than 0.3 wt%, since the content of impurities is large, thermal conductivity is decreased.

Tables 3 and 4 show measurement results of thermal conductivity depending on the content of copper (cu) and magnesium as impurities, respectively.

**[Table 3]**

| Content (wt%) | Cu | Si | Fe | Al | Impurities (Including Cu) | Thermal Conductivity (W/(m·K), 25°C /100°C) |
|---|---|---|---|---|---|---|
| Comparative Example 1 | 0.44 | 11.69 | 0.78 | Remainder | 0.52 | 139/142 |
| Comparative Example 2 | 0.35 | 11.38 | 0.72 | Remainder | 0.43 | 145/147 |
| Example 1 | 0.05 | 11.54 | 0.69 | Remainder | 0.16 | 169/170 |

**[Table 4]**

| Content (wt%) | Mg | Si | Fe | Al | Impurities (Including Mg) | Thermal Conductivity (W/(m·K), 25°C/100°C) |
|---|---|---|---|---|---|---|
| Comparative Example 3 | 0.44 | 11.69 | 0.78 | Remainder | 0.52 | 131/133 |
| Comparative Example 4 | 0.35 | 11.38 | 0.72 | Remainder | 0.43 | 144/145 |
| Example 2 | 0.05 | 11.54 | 0.69 | Remainder | 0.16 | 167/168 |

As shown in Table 3, in Comparative Examples 1 and 2 in which the content of copper (Cu) as impurities is greater than 0.3%, it may be confirmed that both of the thermal conductivity at 25°C and the thermal conductivity at 100°C were less than 150 W/(m·K), which is lower than 169 W/(m·K) of the thermal conductivity at 25°C and 170 W/(m·K) of the thermal conductivity at 100°C in Example 1 in which the content of impurities is less than 0.3 wt%.

Further, as shown in Table 4, in Comparative Examples 3 and 4 in which the content of magnesium (Mg) as impurities is greater than 0.3%, both of the thermal conductivity at 25°C and the thermal conductivity at 100°C were less than 150 W/(m·K), similar to Comparative Examples 1 and 2 described above. The thermal conductivity of less than 150 W/(m·K) is much lower than 167 W/(m·K) of the thermal conductivity at 25°C and 168 W/(m·K) of the thermal conductivity at 100°C in Example 2.

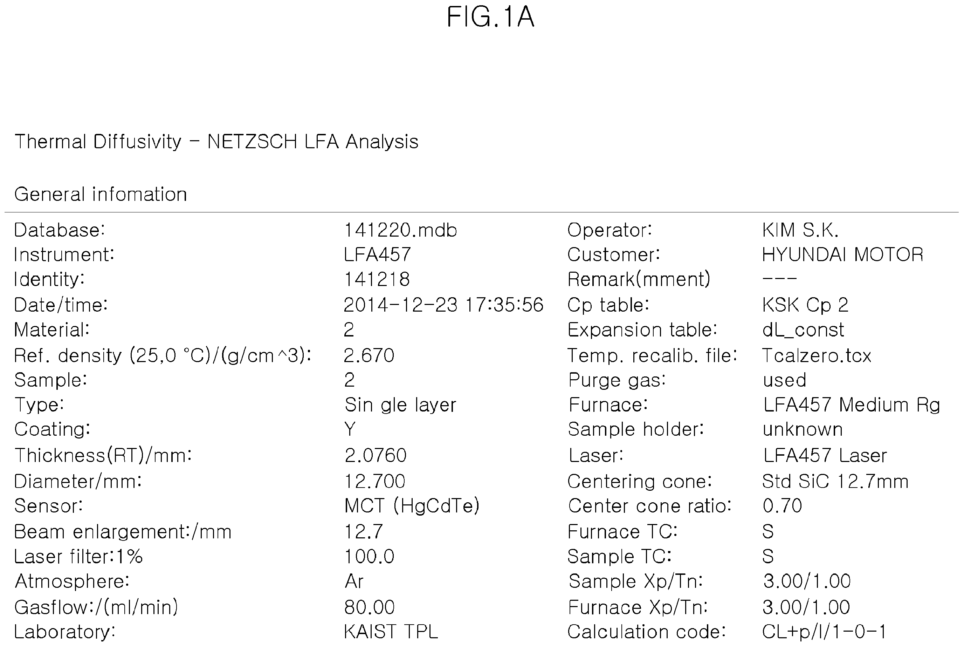

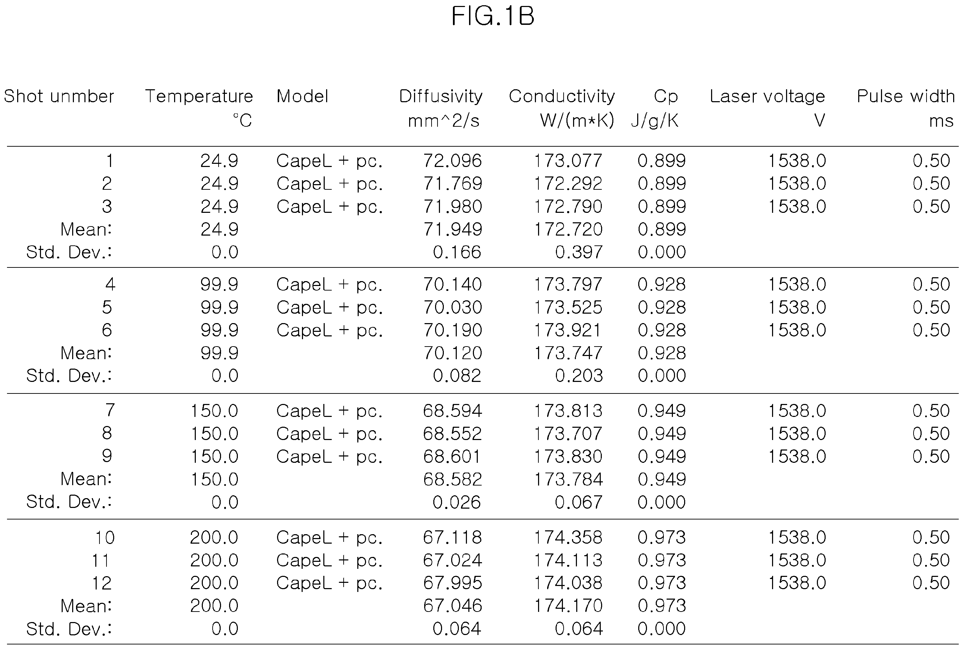

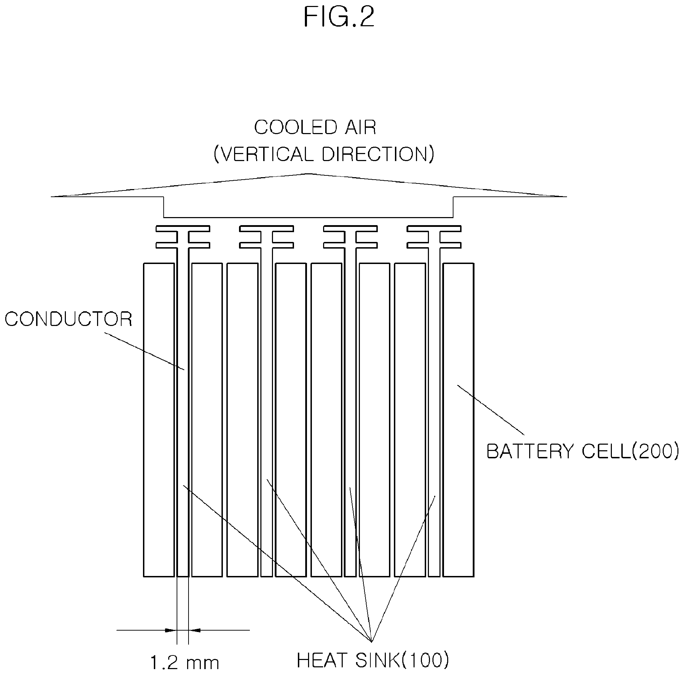

FIGS. 1A and 2B show measurement data of thermal conductivity of the aluminum alloy for diecasting according to an embodiment of the present invention. As shown in FIG. 1A, as a test device for measuring thermal conductivity, a thermal diffusivity measurement system (NETZSCH, LFA 457) was used, and it may be appreciated from the result as shown in FIG. 1B that both of the thermal conductivity at room temperature (25°C) and the thermal conductivity at high temperature (200°C) were 170 W/(m·K) or more.

That is, the aluminum alloy for diecasting of the present invention has thermal conductivity of 167 W/(m·K) or more by containing the impurities in a content of 0.3 wt% or less.

Hereinafter, a heat sink for a battery using an aluminum alloy for diecasting and a manufacturing method thereof will be described in more detail through a detailed embodiment.

FIG. 2 is a diagram schematically showing a configuration of an indirect cooling type battery module including a heat sink.

As shown in FIG. 2, in an indirect cooling type battery module, a plurality of heat sinks 100 are interposed between battery cells 200. Only a lower part of the heat sink 100 is allowed to contact the battery cells 200, and a cooling fluid is allowed to flow at an upper part of the heat sink in a vertical direction to cool heat generated from the battery cell.

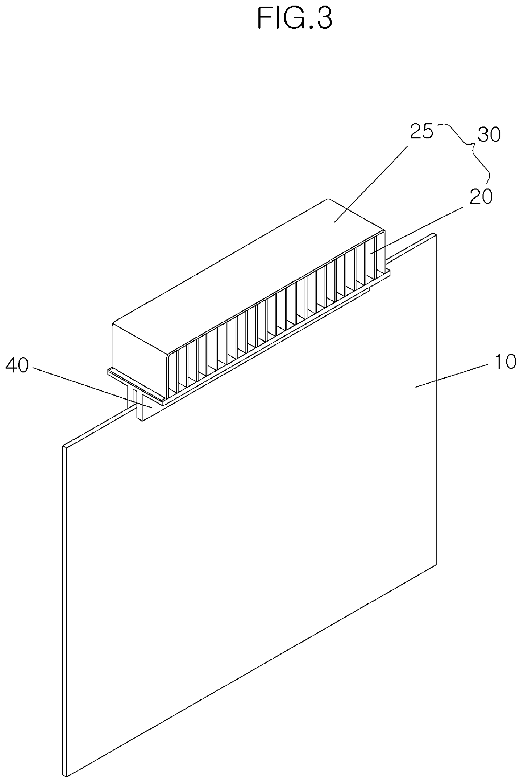

FIG. 3 illustrates the existing assembly type heat sink used for the indirect cooling type battery module. The existing assembly type heat sink includes a lower part 10 formed of an aluminum plate and surface-contacting battery cells, and an upper part 30 including fin-shaped radiation fins 20 that contact a cooling fluid and are formed of an aluminum extruded material, etc. and an upper support part 25 that supports the radiation fins, in which the upper part 30 and the lower part 10 of the assembly type heat sink are mechanically fastened with each other at an assembly part 40 using bolts.

As such, the existing assembly type heat sink is manufactured by forming the lower part 10 and the upper part 30 using different materials, that is, forming the lower part 10 using an aluminum plate and forming the upper part 30 in a fin shape using an aluminum extruded material, etc. that is not for diecasting, and assembling the lower part 10 and the upper part 30. Therefore, defect rate of the heat sink in a manufacturing process is increased, and in particular, heat resistance of the assembly part mechanically fastening the upper part and the lower part is increased, as a result, performance of the battery may be deteriorated. Further, when manufacturing the battery cell by assembling the heat sink, an additional process of separately manufacturing respective plastic structures and assembling the plastic structures is required.

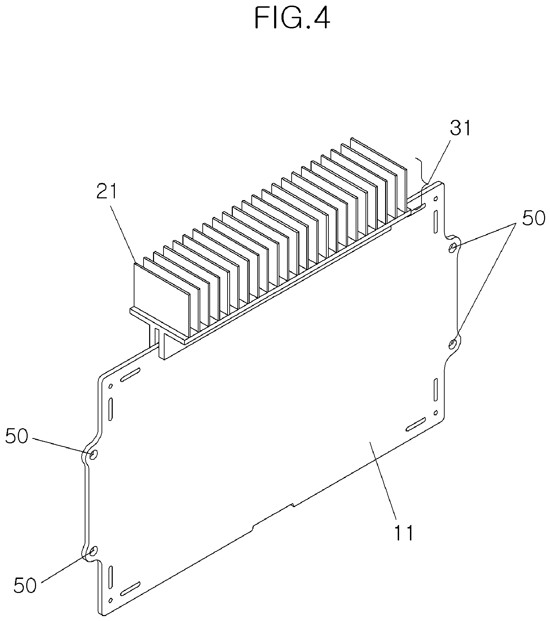

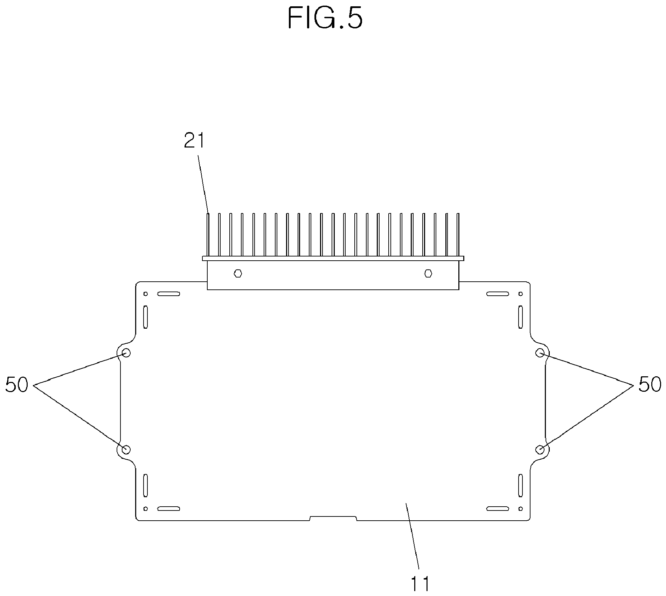

FIGS. 4 and 5 illustrate a heat sink for a battery according to an embodiment of the present invention.

As illustrated in FIG. 4, a heat sink for a battery of the present invention is a heat sink in which a radiation fin part 31 and a thin wall part 11 are integrally formed, the radiation fin part 31 including a plurality of radiation fins 21 that radiate heat by contacting a cooling fluid and the thin wall part 11 surface-contacting battery cells to transfer heat radiated from the battery cells to the radiation fin part 31 that is connected thereon, and having fastening holes 50 for performing insert injection molding of a plastic structure that are formed at both ends of the thin wall part 11.

Specifically, in the heat sink for a battery of the present invention, the radiation fin part 31 includes the plurality of radiation fins 21 formed to be spaced apart from each other at a predetermined distance in a direction orthogonal to a direction of a surface of the thin wall part 11.

Since the radiation fins need to have a shape and arrangement suitable for heat radiation so as to radiate heat to the air or the cooling fluid well, the radiation fins 21 of the present invention preferably, have a height of from 1.5 cm to 3 cm (e.g., about 1.5 cm, 1.6 cm, 1.7 cm, 1.8 cm, 1.9 cm, 2.0 cm, 2.1 cm, 2.2 cm, 2.3 cm, 2.4 cm, 2.5 cm, 2.6 cm, 2.7 cm, 2.8 cm, 2.9 cm, or about 3 cm), a thickness of from about 0.8 mm to 5 mm (e.g., about 0.8 mm, 1, 2, 3, 4, or about 5 mm), and a pitch of from 2 mm to 10 mm (e.g., about 2 mm, 3, 4, 5, 6, 7, 8, 9, or about 10 mm). When the size and the pitch of the radiation fins 21 deviate from the above range, formability of diecasting is deteriorated and the structure suitable for radiation may not be achieved, such that the heat from the battery cells may not be smoothly radiated.

Further, the thin wall part 11 may have a thickness of from 0.8 mm to 1.5 mm (e.g., about 0.8 mm, 0.9 mm, 1 mm, 1.1 mm, 1.2 mm, 1.3 mm, 1.4 mm or about 1.5 mm), most preferably, 1.2 mm.

The thin wall part 11 serves to allow the heat sink to perform smooth radiation by surface-contacting the battery cells, and thus flatness of the surface of the thin wall part is important. If the thickness of the thin wall part is less than 0.8 mm, since the thickness is too thin, the flatness may be decreased. Further, since the heat sink is provided between the battery cells in the indirect cooling type battery module as in FIG. 2, the thickness of the thin wall part in the heat sink may affect the entire size of the battery module. Therefore, the thickness of the thin wall part surface-contacting the battery cells should not be greater than 1.5 mm to minimize entire volume of the battery.

The heat sink for a battery of the present invention is integrally formed using a single material. Here, the single material means the aluminum alloy for diecasting described above, the aluminum alloy containing from 10.0 wt% to 12.0 wt% (e.g., about 10.0 wt%, 10.1 wt%, 10.2 wt%, 10.3 wt%, 10.4 wt%, 10.5 wt%, 10.6 wt%, 10.7 wt%, 10.8 wt%, 10.9 wt%, 11.0 wt%, 11.1 wt%, 11.2 wt%, 11.3 wt%, 11.4 wt%, 11.5 wt%, 11.6 wt%, 11.7 wt%, 11.8 wt%, 11.9 wt%, or about 12.0 wt%) of silicon (Si), from 0.5 wt% to 0.8 wt% (e.g., about 0.5 wt%, 0.6 wt%, 0.7 wt% or about 0.8 wt%) of iron (Fe), from 0.3 wt% or less (e.g., about 0.3 wt%, 0.29 wt%, 0.28 wt%, 0.27 wt%, 0.26 wt%, 0.25 wt%, 0.24 wt%, 0.23 wt%, 0.22 wt%, 0.21 wt%, 0.2 wt%, 0.19 wt%, 0.18 wt%, 0.17 wt%, 0.16 wt%, 0.15 wt%, 0.14 wt%, 0.13 wt%, 0.12 wt%, 0.11 wt%, 0.1 wt%, 0.09 wt%, 0.08 wt%, 0.07 wt%, 0.06 wt%, 0.05 wt% or less) of impurities, and remainder of aluminum (Al).

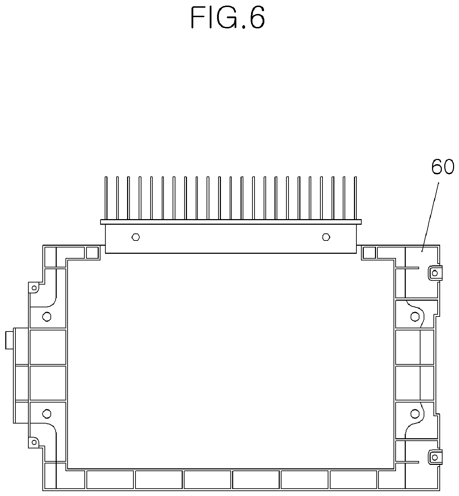

FIG. 6 shows a state in which a plastic structure 60 is integrally injection-molded in the heat sink for a battery of the present invention. The heat sink for a battery is integrally formed using the aluminum alloy by the diecasting method, and then the plastic structure is integrally formed with the thin wall part 11 of the heat sink for a battery by insert injection molding.

A manufacturing method of a heat sink for a battery of the present invention sequentially includes a molten metal forming step of forming a molten metal, a diecasting step, and an aging heat treatment step of heat-treating the heat sink for a battery formed through the diecasting step.

In the molten metal forming step, a molten metal is formed by dissolving an aluminum alloy. The molten metal is formed by dissolving an aluminum alloy containing from 10.0 wt % to 12.0 wt% (e.g., about 10.0 wt%, 10.1 wt%, 10.2 wt%, 10.3 wt%, 10.4 wt%, 10.5 wt%, 10.6 wt%, 10.7 wt%, 10.8 wt%, 10.9 wt%, 11.0 wt%, 11.1 wt%, 11.2 wt%, 11.3 wt%, 11.4 wt%, 11.5 wt%, 11.6 wt%, 11.7 wt%, 11.8 wt%, 11.9 wt%, or about 12.0 wt%) of silicon (Si), from 0.5 wt% to from 0.8 wt% (e.g., about 0.5 wt%, 0.6 wt%, 0.7 wt% or about 0.8 wt%) of iron (Fe), 0.3 wt% or less (e.g., about 0.3 wt%, 0.29 wt%, 0.28 wt%, 0.27 wt%, 0.26 wt%, 0.25 wt%, 0.24 wt%, 0.23 wt%, 0.22 wt%, 0.21 wt%, 0.2 wt%, 0.19 wt%, 0.18 wt%, 0.17 wt%, 0.16 wt%, 0.15 wt%, 0.14 wt%, 0.13 wt%, 0.12 wt%, 0.11 wt%, 0.1 wt%, 0.09 wt%, 0.08 wt%, 0.07 wt%, 0.06 wt%, 0.05 wt% or less) of impurities, and remainder of aluminum (Al). Here, it is preferable that a temperature of the molten metal is maintained at 740°C to 760°C.

Next, in the diecasting step, a diecasting process of forming the heat sink for a battery which is a molded article of the aluminum alloy by injecting the molten metal into a diecasting mold is performed. First, the diecasting mold is preheated to a temperature of 190°C to 240°C in advance before injecting the molten metal. If a temperature of the mold is lower than 190°C, the molten metal is cooled such that injectability is deteriorated. On the contrary, if the temperature of the mold is higher than 240°C, since the temperature is too high, a significant amount of time is required to cool the molten metal, as a result, work time may be increased.

The molten metal is injected into the preheated diecasting mold using a cylinder rod, a piston, or a plunger, and preferably, the molten metal obtained by dissolving the aluminum alloy is put into an injection sleeve and injected into the diecasting mold using the plunger.

Here, when injecting the molten metal using the plunger, a pressurizing speed of the plunger includes a first speed section in which the pressurizing speed of the plunger is low and a second speed section in which the pressurizing speed of the plunger is high. First, in the first speed section of low speed, the plunger is moved to let the air in the injection sleeve out so that the molten metal is filled in the sleeve, and then in the second speed section of high speed, the molten metal is injected into the diecasting mold at high speed.

It is preferable that the speed in the first speed section is from 0.1 m/s to 0.4 m/s, and the speed in the first speed section is from 3 m/s to 3.5 m/s. Here, a point at which the first speed section is changed to the second speed section is set to from 245 mm to 255 mm (e.g., about 245 mm, 246 mm, 247 mm, 248 mm, 249 mm, 250 mm, 251 mm, 252 mm, 253 mm, 254 mm, or about 255 mm).

If the speed in the second speed section is less than 3 m/s, the molten metal is not properly injected into the diecasting mold, such that insufficiently molded portions present, that is, a portion formed at a thin thickness is insufficiently molded, and if the speed in the second speed section is greater than 3.5 m/s, since the speed is high, air may be excessively mixed, thereby affecting the quality of products.

After cooling the molted metal injected into the diecasting mold for a predetermined time, the integral heat sink for a battery is taken out by opening up the mold.

The aging heat treatment step that is T5 heat treatment (artificial aging) is performed on the heat sink for a battery taken out from the mold in order to improve thermal conductivity. Preferably, after raising the temperature of the heat sink for a battery to from 250°C to 350°C, the heat sink for a battery is heat treated for 6 hours and then cooled to a predetermined temperature or lower. In this case, in performing the aging heat treatment, a heating rate is faster than a cooling rate in terms of temperature change per unit time.

In a case of performing the heat treatment at a temperature lower than 250°C increase in thermal conductivity may be insufficient, on the contrary, In a case of performing the heat treatment at a high temperature of 350°C or higher, due to characteristics of the diecasting method, bubbles in the product move to a surface of the product to make the surface uneven, or blister phenomenon in which blisters are generated occur. As a result, the product may not be used as a final product.

In the aging heat treatment step, the product is heated again relatively fast, maintained for 6 hours, and cooled relatively slow, thereby making the aluminum alloy be in a stable equilibrium state to improve thermal conductivity.

Although a result of thermal conductivity of the product after performing the aging heat treatment is not shown in the drawing, the thermal conductivity was measured as 190 W/(m·K) more, and it was confirmed that the thermal conductivity is remarkably improved through the aging heat treatment.

After the aging heat treatment step, the manufacturing method of an integral heat sink for a battery which is a final molded article may further include a step of integrally forming the thin wall part 11 of the heat sink for a battery and a plastic structure by the insert injection molding process.

As described above, the heat sink for a battery of the present invention is manufactured by integrally forming the radiation fin part and the thin wall part by the diecasting method and thus the process of separately assembling the parts is removed, and in manufacturing the battery cell, the plastic structure is integrally formed with the integral heat sink for a battery by insert injection molding, thereby significantly simplifying the manufacturing process of the heat sink.

As described above, in the aluminum alloy for diecasting according to the embodiment of the present invention, the content of silicon (Si) and the content of iron (Fe) are optimized and the total content of impurities which are elements except for silicon (Si), iron (Fe), and Aluminum (Al) is adjusted not to exceed 0.3 wt%. As a result, the aluminum alloy for diecasting of the present invention has thermal conductivity of minimum 167 W/(m·K) or more, that is, may improve thermal conductivity by 200%, as compared to ADC10 or ADC12 which is the existing general aluminum alloy for diecasting that is commercially available.

Further, even in a case in which diecasting is continuously performed 1,000 times or more by using the aluminum alloy for diecasting of the present invention, the problem of formability, seizure of product, or the like did not occur at all, and quality problems of the molded article such as insufficiently molded portions in the product or bubbles in the external surface did not occur. Therefore, it may be appreciated that the aluminum alloy for diecasting of the present invention satisfies the formability requirement of the aluminum alloy for diecasting.

Further, the heat sink for a battery of the present invention is integrally manufactured using a single material through the diecasting process to simplify the manufacturing process, and the shape of the radiation fin may be controlled in the diecasting mold, thereby easily changing the shape of the radiation fin for each optimal temperature of the battery. As a result, temperature control may be easily performed.

Further, in the manufacturing method of a heat sink for a battery of the present invention, the aging heat treatment is performed to stabilize the aluminum alloy, such that the thermal conductivity of the heat sink for a battery is remarkably improved to 190 W/(m·K) or more, thereby manufacturing the heat sink for a battery having excellent heat radiation characteristic.

The aluminum alloy for diecasting has thermal conductivity of minimum 165 W/(m·K), which corresponds to about 75% of thermal conductivity of pure aluminum. The aluminum alloy for diecasting has an effect of improving the thermal conductivity by 200% as compared to ADC10 or ADC12 which is the existing general aluminum alloy for diecasting that is commercially available.

In the case of manufacturing a heat sink or a case of parts requiring heat management using the aluminum alloy of the present invention, weight reduction is possible while maintaining the same performance, such that cost of the material is reduced, and accordingly, cost of the product may also be reduced.

The aluminum alloy for diecasting may be molded to have a complicated shape using the diecasting method by adjusting a content of silicon (Si) and iron (Fe), that is, has improved castability as compared to the existing aluminum material having high thermal conductivity. Further, the aluminum alloy for diecasting of the present invention has an effect of increasing the life of the diecasting mold to a hundred thousand shots from fifty thousand shots of the existing aluminum material for diecasting.

In accordance with the embodiments of the present invention, the heat sink for a battery has an effect of remarkably decreasing defect rate as compared to the existing assembly type heat sink by removing the assembling process by integrally manufacturing the upper part and the lower part unlike the existing assembly type heat sink in which the upper part and the lower part having each function are separately manufactured and assembled.

Further, in accordance with the embodiments of the present invention, the heat sink for a battery may be continuously casted by using the diecasting method, and in the manufacturing process of the heat sink of the present invention, the insert injection molding of the plastic structure is possible, thereby having an effect of remarkably simplifying the overall manufacturing process of the high voltage battery system and significantly decreasing the manufacturing cost.

Further, the problem of heat resistance by the mechanical fastening that the existing assembly type heat sink has may be solved by integrally manufacturing the heat sink, thereby improving the performance of the high voltage battery.

Further, in accordance with the embodiments of the present invention, the heat sink for a battery is manufactured through the diecasting process, such that the shape of the radiation fin may be controlled in the diecasting mold, thereby easily changing the shape of the radiation fin for each optimal temperature of the battery.

The above described embodiments are provided only for a person having ordinary skill in the art to which the present invention pertains to easily practice the present invention, and the present invention is not limited to the above described embodiment and the accompanying drawings. Therefore, various substitutions, modifications, and alterations are possible, without departing from the scope of the present invention as described in the following claims.

## Claims

1. A heat sink (100) for a battery, comprising:
a radiation fin part (31) including a plurality of radiation fins (21) that radiate heat by contacting a cooling fluid; and
a thin wall part (11) surface-contacting battery cells (200) to transfer heat of the battery cells (200) to the radiation fin part (31) that is connected thereon,
wherein fastening holes (50) for performing insert injection molding of a plastic structure (60) are formed at both ends of the thin wall part (11), and the radiation fin part (31) and the thin wall part (11) are integrally manufactured using a single material by diecasting,
wherein the single material is an aluminum alloy, and the aluminum alloy comprises:
10.0 wt% to 12.0 wt% of silicon (Si);
0.5 wt% to 0.8 wt% of iron (Fe);
0.3 wt% or less of impurities; and remainder of aluminum (Al).

2. The heat sink (100) for a battery of claim 1, wherein two or more fastening holes (50) are formed at one side end of the thin wall part (11).

3. The heat sink (100) for a battery of claim 1 or 2, wherein the radiation fin part (31) includes the plurality of radiation fins (21) formed to be spaced apart from each other at a predetermined distance in a direction orthogonal to a direction of a surface of the thin wall part (11) and is integrally formed on an upper end of the thin wall part (11), and the radiation fins (21) have a height of from 1.5 cm to 3 cm, a thickness of from 0.8 mm to 5 mm, and a pitch of from 2 mm to 10 mm.

4. The heat sink (100) for a battery of any one of claims 1 to 3, wherein the thin wall part (11) has a thickness of 0.8 mm to 1.5 mm.

5. The heat sink (100) for a battery of any one of claims 1 to 4, wherein the impurities include one or more elements selected from zinc (Zn), manganese (Mn), chromium (Cr), nickel (Ni), titanium (Ti), boron (B), and tin (Sn).

6. A manufacturing method of a heat sink for a battery, comprising:
a molten metal forming step of forming a molten metal by dissolving 10.0 wt% to 12.0 wt% of silicon (Si), 0.5 wt% to 0.8 wt% of iron (Fe), 0.3 wt% or less of impurities, and remainder of aluminum (Al).
a diecasting step of injecting the molten metal into a diecasting mold to form the heat sink for a battery; and
an aging heat treatment step of heat treating the heat sink for a battery for 6 hours after raising a temperature of the heat sink for a battery to from 250°C to 350°C, and then cooling the heat sink for a battery to a predetermined temperature or lower.

7. The manufacturing method of a heat sink for a battery of claim 6, wherein in the diecasting step, the molten metal is injected into the diecasting mold using a plunger, a pressurizing speed of the plunger is divided into a first speed section and a second speed section having different pressurizing speeds, a pressurizing speed in the second speed section is faster than that in the first speed section, and the pressurizing speed in the second speed section is from 3 m/s to 3.5 m/s.

8. The manufacturing method of a heat sink for a battery of claim 6 or 7 wherein in the aging heat treatment step, a heating rate is faster than a cooling rate in terms of temperature change per unit time.

## Patentansprüche

1. Eine Wärmesenke (100) für eine Batterie, aufweisend:
einen Abstrahlungslamellen-Teil (31), welcher eine Mehrzahl von Abstrahlungslamellen (21), welche Wärme durch Berühren eines Kühlfluides abstrahlen, aufweist, und
einen Dünne-Wand-Teil (11), welcher Batteriezellen (200) flächenberührt, um Wärme der Batteriezellen (200) an den Abstrahlungslamellen-Teil (31), welcher damit verbunden ist, zu übertragen,
wobei Befestigungslöcher (50) zum Durchführen eines Einlage-Spritzgießens einer Kunststoffstruktur (60) an beiden Enden des Dünne-Wand-Teils (11) ausgebildet sind, und der Abstrahlungslamellen-Teil (31) und der Dünne-Wand-Teil (11) integral unter Verwendung eines einzigen Materials durch Druckgießen gefertigt sind,
wobei das einzige Material eine Aluminiumlegierung ist und die Aluminiumlegierung aufweist:
10,0 Gew.-% bis 12,0 Gew.-% an Silizium (Si),
0,5 Gew.-% bis 0,8 Gew.-% an Eisen (Fe),
0,3 Gew.-% oder weniger an Verunreinigungen, und einen Rest aus Aluminium (Al).

2. Die Wärmesenke (100) für eine Batterie nach Anspruch 1, wobei zwei oder mehr Befestigungslöcher (50) an einem seitlichen Ende des Dünne-Wand-Teils (11) ausgebildet sind.

3. Die Wärmesenke (100) für eine Batterie nach Anspruch 1 oder 2, wobei der Abstrahlungslamellen-Teil (31) die Mehrzahl von Abstrahlungslamellen (21), welche ausgebildet sind, so dass sie voneinander mit einer vorbestimmten Distanz in einer Richtung, die senkrecht zu einer Richtung einer Fläche des Dünne-Wand-Teils (11) ist, im Abstand angeordnet sind, aufweist und an einem oberen Ende des Dünne-Wand-Teils (11) integral ausgebildet ist, und die Abstrahlungslamellen (21) eine Höhe von 1,5 cm bis 3 cm, eine Dicke von 0,8 mm bis 5 mm und eine Teilung von 2 mm bis 10 mm haben.

4. Die Wärmesenke (100) für eine Batterie nach irgendeinem nach Ansprüchen 1 bis 3, wobei der Dünne-Wand-Teil (11) eine Dicke von 0,8 mm bis 1,5 mm hat.

5. Die Wärmesenke (100) für eine Batterie nach irgendeinem nach Ansprüchen 1 bis 4, wobei die Verunreinigungen eines oder mehrere Elemente, welche aus Zink (Zn), Mangan (Mn), Chrom (Cr), Nickel (Ni), Titan (Ti), Bor (B) und Zinn (Sn) ausgewählt sind, aufweisen.

6. Ein Fertigungsverfahren einer Wärmesenke für eine Batterie, aufweisend:
einen Geschmolzenes-Metall-Bilden-Schritt eines Bildens eines geschmolzenen Metalls durch Zerlassen von 10,0 Gew.-% bis 12,0 Gew.-% an Silizium (Si), 0,5 Gew.-% bis 0,8 Gew.-% an Eisen (Fe), 0,3 Gew.-% oder weniger an Verunreinigungen und eines Rests aus Aluminium (AI),
einen Druckgießen-Schritt eines Injizierens des geschmolzenen Metalls in eine Druckgussform zum Ausbilden der Wärmesenke für eine Batterie, und
einen Alterungswärmebehandlung-Schritt eines Wärmebehandelns der Wärmesenke für eine Batterie für 6 Stunden nach einem Erhöhen einer Temperatur der Wärmesenke für eine Batterie auf 250°C bis 350°C und dann Abkühlens der Wärmesenke für eine Batterie auf eine vorbestimmte Temperatur oder weniger.

7. Das Fertigungsverfahren einer Wärmesenke für eine Batterie nach Anspruch 6, wobei, in dem Druckgießen-Schritt, das geschmolzene Metall in die Druckgussform mittels eines Kolbens injiziert wird, wobei eine Druckbeaufschlagungsgeschwindigkeit des Kolbens in einen ersten Geschwindigkeitsabschnitt und einen zweiten Geschwindigkeitsabschnitt, welche unterschiedliche Druckbeaufschlagungsgeschwindigkeiten aufweisen, unterteilt ist, wobei eine Druckbeaufschlagungsgeschwindigkeit in dem zweiten Geschwindigkeitsabschnitt schneller ist als diejenige in dem ersten Geschwindigkeitsabschnitt, und wobei die Druckbeaufschlagungsgeschwindigkeit in dem zweiten Geschwindigkeitsabschnitt von 3 m/s bis 3,5 m/s beträgt.

8. Das Fertigungsverfahren einer Wärmesenke für eine Batterie nach Anspruch 6 oder 7, wobei, in dem Alterungswärmebehandlung-Schritt, eine Heizrate schneller ist als eine Kühlrate in Bezug auf Temperaturveränderung pro Zeiteinheit.

## Revendications

1. Dissipateur thermique (100) destiné à une batterie, comprenant :
une partie d'ailettes de rayonnement (31) comprenant une pluralité d'ailettes de rayonnement (21) qui irradient la chaleur par contact avec un liquide de refroidissement ; et
une partie de paroi fine (11) en contact de surface avec des éléments de batterie (200) afin de transférer la chaleur des éléments de batterie (200) vers la partie d'ailettes de rayonnement (31) qui est reliée dessus,
dans lequel des trous de fixation (50) destinés à procéder à un moulage par injection par insert d'une structure en plastique (60) sont formés aux deux extrémités de la partie de paroi fine (11), et la partie d'ailettes de rayonnement (31) et la partie de paroi fine (11) sont intégralement fabriquées à l'aide d'un matériau unique par moulage sous pression,
dans lequel le matériau unique est un alliage d'aluminium, et l'alliage d'aluminium comprend :
10% en poids à 12% en poids de silicium (Si) ;
0,5% en poids à 0,8% en poids de fer (Fe) ;
0,3% en poids ou moins d'impuretés ; et le reste d'aluminium (AI).

2. Dissipateur thermique (100) destiné à une batterie selon la revendication 1, dans lequel deux trous de fixation ou plus (50) sont formés au niveau d'une extrémité latérale de la partie de paroi fine (11).

3. Dissipateur thermique (100) destiné à une batterie selon la revendication 1 ou 2, dans lequel la partie d'ailettes de rayonnement (31) comprend la pluralité d'ailettes de rayonnement (21) formées pour être espacées les unes des autres à une distance prédéterminée dans une direction orthogonale par rapport à une direction d'une surface de la partie de paroi fine (11) et est intégralement formée sur une extrémité supérieure de la partie de paroi fine (11), et les ailettes de rayonnement (21) possèdent une hauteur comprise entre 1,5 cm et 3 cm, une épaisseur comprise entre 0,8 mm et 5 mm, et un pas compris entre 2 mm et 10 mm.

4. Dissipateur thermique (100) destiné à une batterie selon l'une quelconque des revendications 1 à 3, dans lequel la partie de paroi fine (11) présente une épaisseur comprise entre 0,8 mm et 1,5 mm.

5. Dissipateur thermique (100) destiné à une batterie selon l'une quelconque des revendications 1 à 4, dans lequel les impuretés comprennent un ou plusieurs éléments choisis parmi du zinc (Zn), du manganèse (Mn), du chrome (Cr), du nickel (Ni), du titane (Ti), du bore (B) et de l'étain (Sn).

6. Procédé de fabrication d'un dissipateur thermique destiné à une batterie, comprenant :
une étape de mise en forme de métal fondu qui consiste à mettre en forme un métal fondu en dissolvant 10% en poids à 12% en poids de silicium (Si), 0,5% en poids à 0,8% en poids de fer (Fe), 0,3% en poids ou moins d'impuretés, et le reste d'aluminium (AI),
une étape de moulage sous pression qui consiste à injecter le métal fondu dans un moule de coulage sous pression afin de former le dissipateur thermique destiné à une batterie ; et
une étape de traitement thermique de vieillissement qui consiste à traiter thermiquement le dissipateur thermique destiné à une batterie pendant 6 heures après l'augmentation d'une température du dissipateur thermique destiné à une batterie de 250°c à 350°C, puis en refroidissant le dissipateur thermique destiné à une batterie à une température prédéterminée ou une température inférieure.

7. Procédé de fabrication d'un dissipateur thermique destiné à une batterie selon la revendication 6, dans lequel, à l'étape de moulage sous pression, le métal fondu est injecté dans le moule de coulage sous pression à l'aide d'un plongeur, une vitesse de pressurisation du plongeur est divisée en une première section de vitesse et une seconde section de vitesse ayant des vitesses de pressurisation différentes, une vitesse de pressurisation dans la seconde section de vitesse étant supérieure à celle de la première section de vitesse, et la vitesse de pressurisation dans la seconde section de vitesse est comprise entre 3 m/s et 3,5 m/s.

8. Procédé de fabrication d'un dissipateur thermique destiné à une batterie selon la revendication 6 ou 7, dans lequel, à l'étape de traitement thermique de vieillissement, une vitesse de chauffage est plus rapide qu'une vitesse de refroidissement en termes de changement de température par unité de temps.
